# EUROPEAN PATENT APPLICATION

(11) **EP 1 852 044 A1**
(43) Date of publication of application: **07.11.2007**
(21) Application number: 06076000.6
(22) Date of filing: 04.05.2006
(51) Int. Cl.: A47J 31/40

(54) **Apparatus for preparing milk-based baby food**

(71) Applicant: Impress Group B.V., 7418 AH Deventer (NL)
(72) Inventor: Blaauw, Hendrikus Josephus Antonius, 7924 PW Hoogeveen (NL)
(74) Representative: Prins, Hendrik Willem

(57) **Abstract**

The invention relates to a apparatus for preparing milk-based food for a baby, comprising:
i) a food supply unit providing a storage for powdered milk-based baby food;
ii) a metering unit to be supplied from the food supply unit, and metering the desired amount of powdered baby food into a container;
iii) vibrating means for vibrating the food supply unit and/or metering unit;
iv) a water supply unit for supplying a desired amount of water;
v) a heating unit for providing heated baby food; and
vi) the control unit for controlling the metering unit and the heating unit.

## Description

The present invention relates to an apparatus for preparing milk-based food for a baby. More particular the present invention relates to an apparatus for the hygienic and supplier-friendly preparation of bottle food for a baby.

Presently, bottle food for a baby is prepared by metering with a metering spoon, a particular amount of powdered baby food into a container and supplying subsequently water in an amount dependent on the metered amount of powdered baby food. The bottle is shaken in order to provide a homogeneous liquid baby food, which is subsequently heated to body temperature.

Accordingly, the preparation of the bottle baby food requires several steps which are time consuming and open to errors in relation to the added amount of powdered baby food and/or water. This is particularly relevant during the late evenings and overnight when the person preparing the baby bottle food is less attentive and sleepy.

The present invention has for its object to provide an apparatus which overcomes the above mentioned drawbacks and is suitable for preparing baby bottle food up to a baby age of about 2-3 years. Preferably the prepared baby bottle food is ready for use.

Accordingly the present invention provides an apparatus for preparing milk-based food for a baby, comprising:
i) a food supply unit providing a storage for powdered milk-based baby food;
ii) a metering unit to be supplied from the food supply unit, and metering the desired amount of powdered baby food into a container;
iii) vibrating means for vibrating the food supply unit and/or metering unit;
iv) a water supply unit for supplying a desired amount of water;
v) a heating unit for providing heated baby food; and
vi) the control unit for controlling the metering unit and the heating unit.

The food supply unit provides for a storage of powdered milk-based baby food and has such a volume that at least the largest single baby bottle food amount is prepared which could be up to 54 grams of powder/360 ml water or any other relevant mixing ratio between powdered baby food and water.

The metering unit supplies the powdered baby food in adjustable discrete amounts relating to the feeding requirements of the baby dependent on its age. The metered amount of baby food is supplied into a container, preferably the bottle for baby food. The apparatus further comprises vibrating means for vibrating the powdered baby food. For reasons, that upon standing during several hours the powdered baby food will form bridges and the powder particles will stick to one another thereby having a negative effect on the metering function of the metering unit for powdered baby food. By vibration the metering powdered baby food it will be at a generally constant density and therefore in a substantially constant metered amount dispensed.

The water supply unit will provide the desired amount of water dependent on the metered amount of powdered baby food. The heating unit is provided for heating the baby food after its preparation or heating the water before it is added to the powdered baby food. Finally, the apparatus according to the invention comprises a control unit for controlling the function of the metering unit such that the desired amount of powdered baby food is metered and supplied to the container. The control unit further controls the heating unit in order to obtain a prepared liquid bottle baby food which is of the desired temperature such as body temperature, such as 37°C ±2°C.

Preferably the food supply unit comprises a powdered body food container, which is connected with a hopper. Accordingly the apparatus may be constantly supplied with new powdered by food by exchanging powdered body food containers. The powdered baby food container preferably is provided with an upper rim of a form such that it will form a good connection with the hopper, preferably via a snap connection.

According to a preferred embodiment the hopper has a hopper angle of 70°-150°. Accordingly, the powdered baby food in the hopper shows suitable flowing properties towards the metering device. The flow properties are optimal when the hopper angle is between preferably 90°-120°. At hopper angles of 90° and more the total height of the hopper is conveniently reduced whereby the total height of the apparatus is within convenient limits.

The release of powdered baby food from the hopper is optimal when the hopper has a conical shape in cross section.

The exchange of powdered baby food containers is optimal when the hopper is provided with a closing valve such that the hopper released from the metering unit could be placed in a reversed position onto a top open powdered baby food container. After the container and the hopper have been connected this assembly could be reversed in position where after the hopper is placed on the metering unit. The closing valve thereby avoids spoilage of any powdered baby food. Preferably the closing valve is formed by the metering elements of the metering unit.

According to another embodiment the metering unit comprises a vibrating motor. Accordingly when connected to the hopper the content of the hopper is in a vibrating mode thereby providing optimal and constant metering of powdered baby food and avoids the use of separate vibrating means.

The metering device may comprise a metering element such as a metering slide, a metering worm, a rotatable disc provided with holes or a horizontally arranged rotor. The sliding unit and the worm may allow spoilage of powdered baby food or are less easily subject to a cleaning operation. Preferably the metering unit comprises the horizontal rotor. This horizontal rotor driven by a motor, preferably a vibrating motor provides best results in constantly metering powdered baby food with an optimal standard deviation over a wide range of metering amounts of powdered baby food. Preferably the rotor has 3-15 spikes. The metering of powdered baby food is determent by the volume of the space in between two spikes and by the rotational speed of the rotor. Preferably the rotor has 6-12 spikes. The larger the number of spikes the smaller is the metering volume and thereby the larger the metering time required for metering the desired amount of powdered baby food. In order to decrease the metering time the rotational speed of the rotor may be increased but higher rotational speeds are a disadvantage in relation to the accuracy of the amount of metered powdered baby food. At a number of spikes of 7-9 an optimum is obtained in those in time and those in accuracy. Most preferred is, a rotor comprising eight spikes.

The metered amount of powdered baby food is more easily and with more confidence released from the metering spaces between the spikes and the spikes are provided at their apex corner with a rounded curve.

The rotor is preferably rotably driven by preferably vibrating motor and at the other hand is supported in a bearing. This implies that only in one wall of the housing of the metering device powdered baby food may escape. However preferably a holder is provided at the bore through with the motor or rotor shaft passes through the wall of the metering device.

Preferably the hopper and at least a part of the metering unit form an integral structural element. Accordingly, this integral structural element could be when desired but regularly cleaned. This cleaning may be accomplished in a dishwasher. Most preferably the hopper and the upper part of the metering unit form an integral structural element comprising the rotor which is easy to clean and allows for a closing of the hopper during the powdered baby food container exchange.

According to another embodiment the water supply unit may comprise a tap water supply and/or a mineral water supply. It may be a container, which is regularly filled with water or a holder for a bottle, which is regularly exchanged. The bottle is then connected to a bottle connector, which by a hose will supply the water into the container or to the metering unit.

According the another embodiment the heating unit heats water to about 37°C ±2°C. This is accomplished by heating the water to be supplied or heating the water during its supply or heating of the water after it has been added to the metered powdered baby food before or after shaking the mixture of powder and water.

According to another embodiment the control unit allows the control of an adjustable preferably discrete amount of powdered baby food. The amount of metering is dependent on the number of spikes. When the number of spikes is constant of the rotor, the metering is determined by the number of revolutions and/or the rotational speed of the motor. Accordingly the user of the apparatus according to the invention may determine each time or when desired the unit amount of powdered baby food to be metered and supplied.

According to another embodiment the control unit controls the performance of the heating unit and thereby the heating of the water.

It is preferred that the food supply unit, preferably the hopper, is provided with a sensor for an indication of the filling degree of one or more preferably several unit dosages of metered powdered baby food. The same applies in relation to the water supply. Accordingly, after activation of the apparatus in one single run the smallest or largest volume of liquid baby food could be prepared without an intermediate exchange of baby food containers or supply to the hopper of powdered baby food. In this respect it is preferred that the control unit comprises a selector for a discrete dosing amount of powdered baby food and/or water.

Mentioned and other features of the present apparatus for preparing milk-based food for a baby will be further described in illustrated by describing several embodiments while making reference to the annexed drawings. These embodiments and description are given for illustrative purposes only and are not intended to limit the apparatus according to the invention to any such extent.

In the drawings:
Figure 1 shows a perspective view of an apparatus according to the invention;
Figure 2 shows a side view of the apparatus of Figure 1;
Figure 3 shows in cross-section the apparatus of Figure 1;
Figure 4 shows at a larger scale detail IV of Figure 3;
Figure 5 shows a top view of the apparatus according to Figure 1;
Figure 6A a top view and Figure 6B shows a side view of the rotor from Figure 6A;
Figure 7 an exploded view of the metering device according to the invention;
Figure 8 an alternative of the exploded view of the metering device of Figure 7; and
Figure 9 in steps A-E the exchange of the container of powdered baby food.

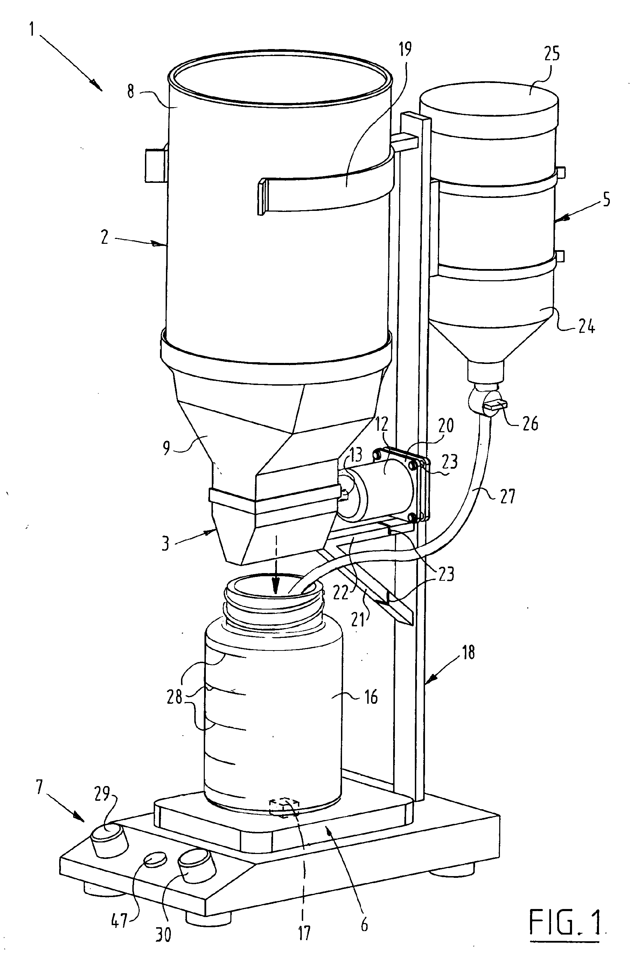

Figure 1 shows an apparatus 1 according to the invention for preparing milk-based food for a baby. The apparatus 1 comprises a food supply unit 2, a metering unit 3, vibrating means 4, water supply unit 5, a heating unit 6 and a control unit 7.

The food supply unit 2 is a container 8 provided with powdered baby food. This container 8 is connected to a hopper 9. The container 8 and the hopper 9 form the food supply unit 2. The hopper 9 is connected to the metering unit 3 via a hopper opening 10. The metering device comprises a horizontally arranged rotor driven by a motor 12. The driving shaft 13 is in line with the rotational axis 14 of the rotor 11. The metering device is provided with a release opening 15 via which the metered amount of powdered baby food is released into a bottle 16 for liquid baby food. The apparatus 1 according to the invention is provided with vibrating means 4 which result in a vibration of powdered baby food in the container 8 or at least in the hopper 9 such that at constant density powdered baby food is metered and so-called bridge formation or clogging avoided. According to another option, the vibrating means may be included in the motor 12.

The apparatus 1 further comprises a heating unit 6 which is in the embodiment shown in Figure 1 a heating plate which is further comprised of steering or shaking means 17 such that the metered powdered baby and the water form a homogeneous liquid mixture.

The apparatus 1 further comprises a frame 18 provided with a clamp 19 for holding the container 8. The frame further carries the motor 12. The motor is arranged in a motor frame 20 such that vibrations from the vibrating means 4 are not transferred via the frame 18 onto the working table or kitchen table onto which the apparatus 1 is placed. In the embodiment shown in Figure 1, the frame comprises two supporting beams 21 and 22, which are also provided with resilient inserts 23 which are the same inserts 23 which are interposed between the motor frame 20 and the frame 18. The water unit may comprise a water holder 24 closed by a lid 25. Water may be supplied via the manually activated valve 26 and hose 27 into the bottle 16. The amount is metered by the user of the apparatus following the filling of the bottle via the metering lines 28 on the bottle 16. Preferably the water dosing is controlled by the control unit 7.

The control unit 7 comprises a selector 29 for the amount of powder and a selector 30 for the amount of water. The control unit in dependence of the position of the selectors 29 and 30 activates the motor 12 of valve 26, respectively. Accordingly, the desired amount of liquid baby bottle food is produced in the desired ratio of powdered baby food over the amount of water.

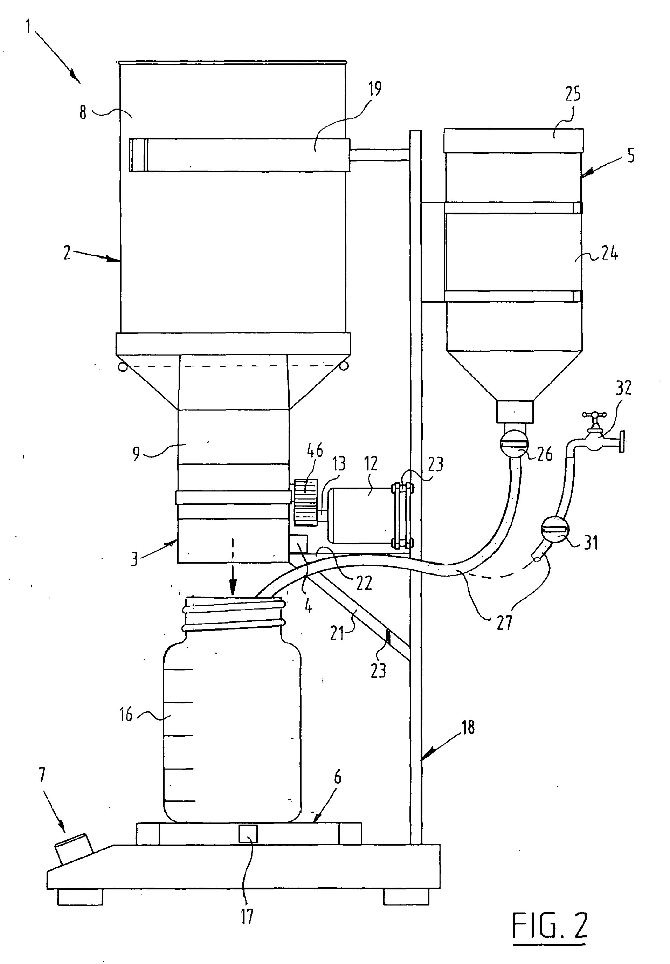

Figure 2 shows in side view the same and alternative apparatus 1 of Figure 1. In the alternative shown, the water supply unit 5 may be substituted by a tap water connection 32 provided with a valve 31 incorporated in the hose 27. Accordingly, instead of mineral water or filtered water, tap water may be used a desired by the user of the apparatus according to Figure 1 or 2.

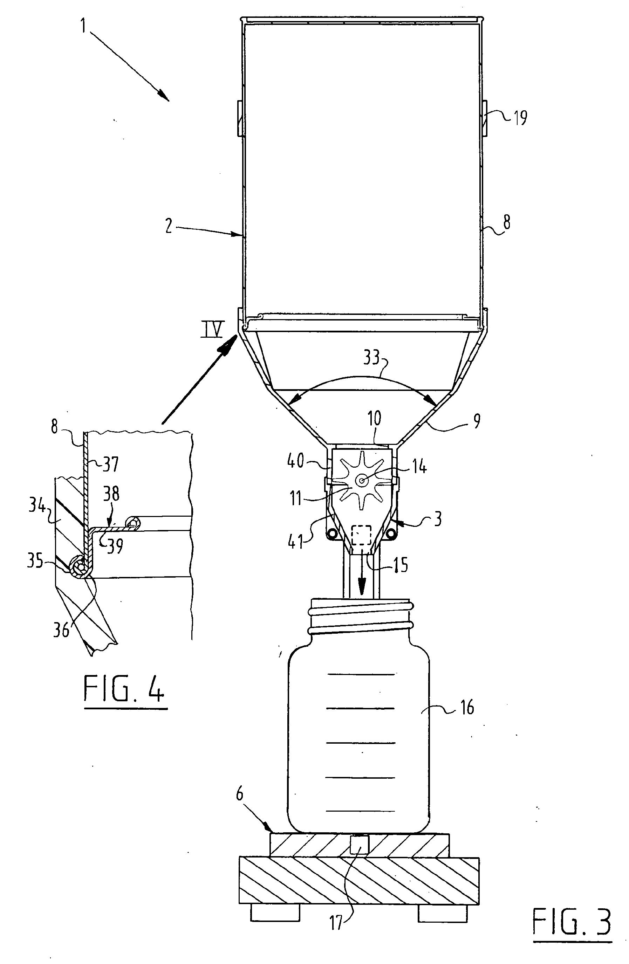

Figure 3 shows the interior of the apparatus 1 according to the invention. The powdered baby food container 8 is connected to the hopper 9. The hopper 9 has a conical shape and the hopper angle is preferably between 90-120° thereby providing the best release properties of powdered baby food from the hopper 9 into the metering device 3.

As shown in detail in Figure 4, the hopper upper wall 34 is internally provided with a circumferential groove 35 into which is snapped the curl 36 of the container 8. This curl is formed in between the container body 37 and a ring 38 provided with a horizontal section 39. It is on this horizontal section 39 that some powder may be withhold. Accordingly it is preferred that this section 39 is in an inclined position.

The hopper 9 may be made of polycarbonate, polypropylene or polyethylene. Most preferably the hopper 9 is produced by injection moulding.

As shown in Figure 3, the hopper 9 forms an integral part with the upper section 40 of the metering unit. The upper section 40 with a lower section 41 forms the housing of the metering unit 3.

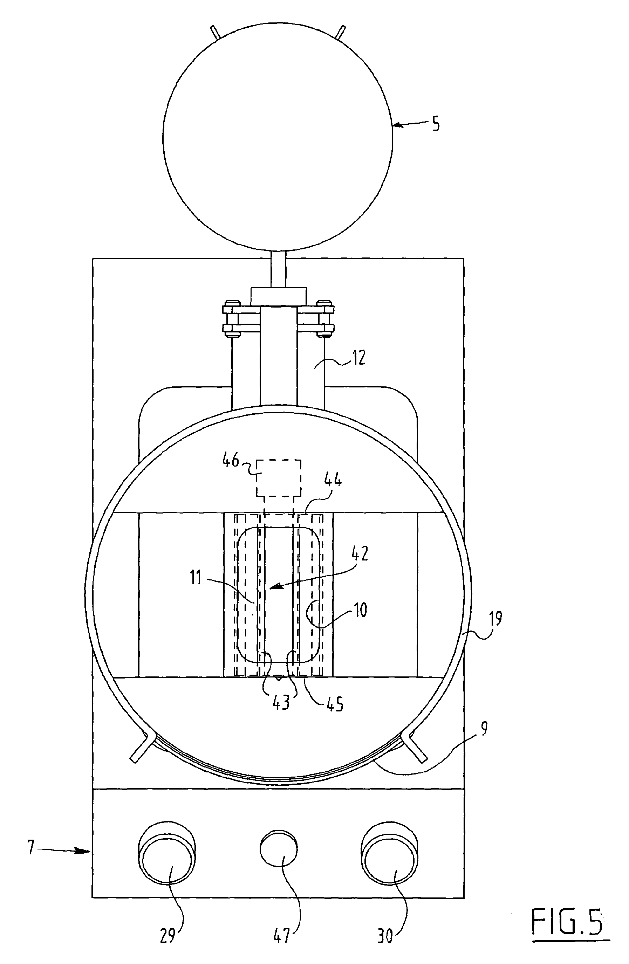

Figure 5 shows the interior of the hopper 9. It is shown that the hopper opening 10 is in its dimensions smaller than the length and the width of the underlying rotor 11. This allows optimum filling of a space 42 in between two spikes 43 and reduces the spoilage of powder via the opposite ends 44 and 45 of the rotor.

The rotor is driven by the motor 12 via a gear 46.

Furthermore it is noted that the control unit 7 further comprises an ON/OFF knob 47.

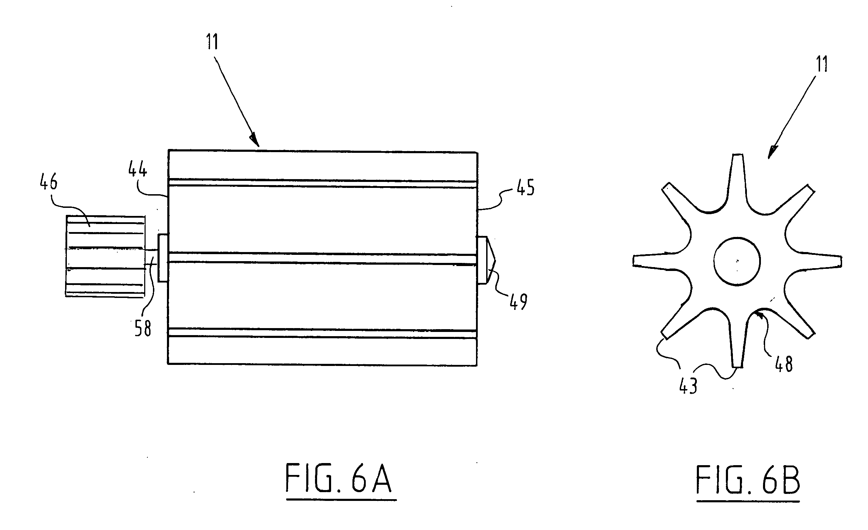

Figures 6A and 6B showing more detail of the construction of the rotor 11.

In cross-section the rotor comprises eight spikes 43. An apex corner 48 between two spikes 43 is rounded off improving thereby the release of powder from the rotor space in between two spikes 43.

At the end 44 of the rotor 11 is applied the gear 46 which is connected to the motor 12. At the other end 45 is provided a bearing 49 which is arranged in the wall the metering device.

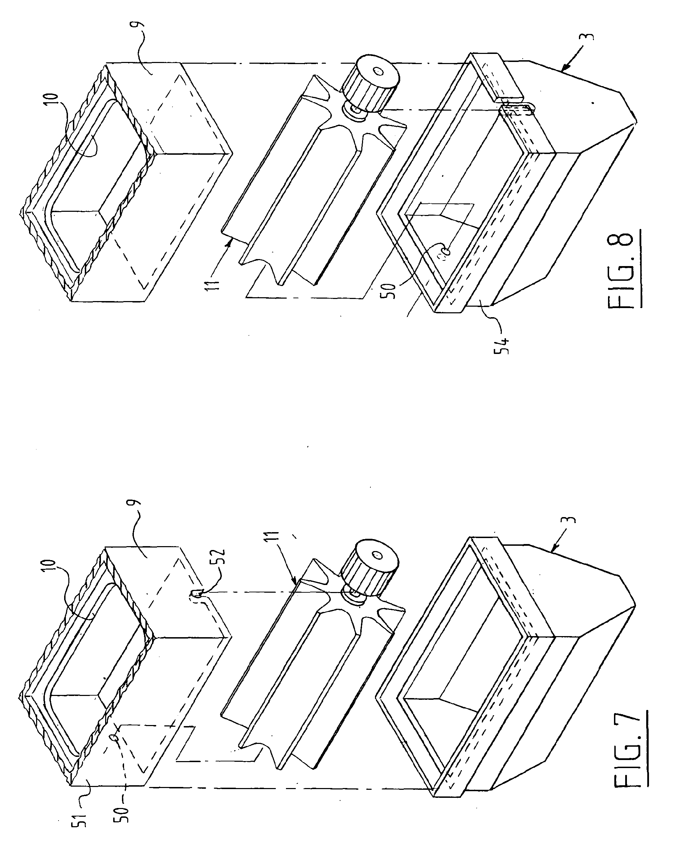

As shown in Figure 7, the rotor 11 is arranged with the bearing 49 in a bearing support 50 in a wall 51 of the hopper 9 and the rotor shaft 58 passes through an opening 52. The hopper 9 and the metering unit 3 may be releasable connected with insertion of the rotor 11 within the hopper unit.

Figure 8 shows an alternative in which the rotor 11 is supported in a bearing support 50 applied in a wall 54 of the metering unit 3. Again the hopper 9 and the metering unit 3 are releasable connected with the interposition of the rotor 11.

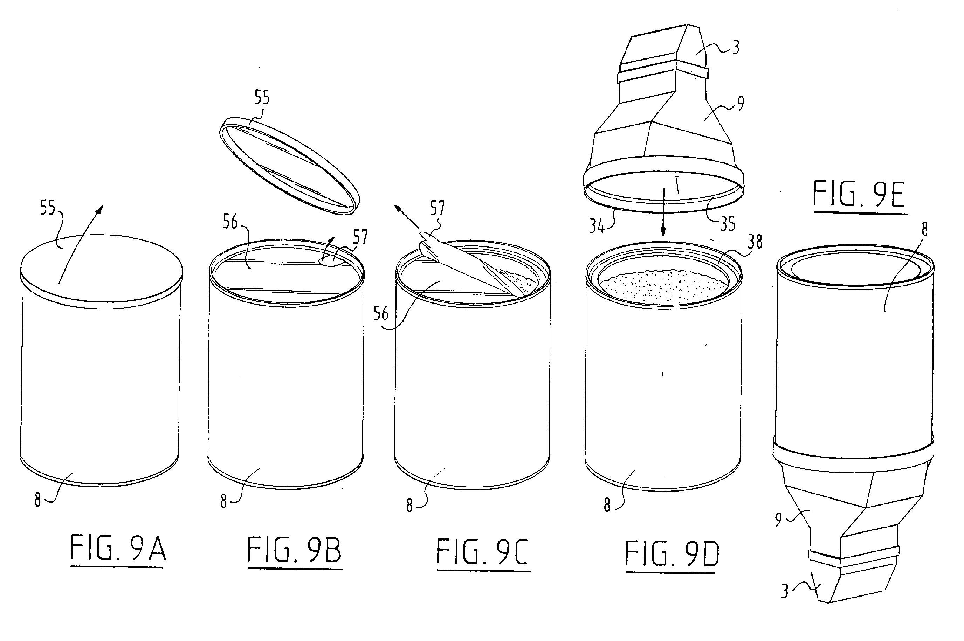

Accordingly a sub unit is formed which is easy to clean, for instance in a dishwasher, but provide a closed metering device with the hopper which is advantageous during the exchange of powder food containers. This operation is shown in Figure 9.

Figure 9 shows in Figure 9A a closed container 8 provided with a plastic cap 55. The plastic cap may be removed thereby exposing a vulnerable closing foil 56 provided with a tab 57 (see Fig. 9B).

Figure 9C shows that the user may open the container 8 by removing the foil 56 by gripping the tab 57.

At this point it is noted that instead of a closing foil other containers may be used such as a so-called easy opening container provided with a scored end wall, which may be torn open and removed.

As shown in Figure 9D the hopper 9 provided with the metering unit 3 is connected to the container 8 over its upwardly open opening 58 onto which the hopper is clamped via its wall 34 (see Fig. 4).

Subsequently the assembly comprising the container 8, the hopper 9 and the metering device 3 is formed. Due to the presence of the rotor 11 with sufficient spikes over its circumference it is avoided that a substantial amount of powder, if any, is released before the metering device is installed within the clamp 19 and connected via the gear 46 to the motor 12 over the heating unit onto which subsequently a bottle 16 may be positioned.

In use by the user of the apparatus 1, a bottle 16 to be filled with liquid bottle food for a baby is positioned in the heating unit 6 over the steering or shaking means 17. The knob 47 is pressed thereby activating the control unit 7. The desired amount of powder may be adjusted via the selector 29 and the amount of the water via the selector 30. The motor 12 is activated so that via a sufficient number of revolutions of the rotor 11 the desired metered amount of powdered baby food is released from the container 8 into the bottle 16. Subsequently water is supplied either manually via de knob 26 or under the control of the control unit into the bottle 16 where the water is heated during steering.

In the alternative water to be supplied may be heated and as heated water entered into the bottle 16.

Not shown is a heating unit present at the bottom of the hopper 9 at the entrance of the metering device 3 such that powder is heated to a temperature of up to 5°C above room temperature. This heating avoids moistening of the baby food powder which is hygroscopic. This moistening would result in a more tacking powder which could have a negative effect on the metering action of the metering unit 3.

The container is of such volume that weekly or two weekly a container is to be exchanged. The water unit 5 may be of such a volume that daily water is to be exchanged. The water unit may be provided with heating means such that heated water is supplied into the bottle 16. However, separating heating means included in the supply hose 27 to the bottle 16 or incorporated in the base on which the bottle is supported may be used providing heated liquid baby food.

## Claims

1. Apparatus for preparing milk-based food for a baby, comprising:
i) a food supply unit providing a storage for powdered milk-based baby food;
ii) a metering unit to be supplied from the food supply unit, and metering the desired amount of powdered baby food into a container;
iii) vibrating means for vibrating the food supply unit and/or metering unit;
iv) a water supply unit for supplying a desired amount of water;
v) a heating unit for providing heated baby food; and
vi) the control unit for controlling the metering unit and the heating unit.

2. Apparatus according to claim 1, wherein the food supply unit comprises a powdered baby food container connected with a hopper.

3. Apparatus according to claim 2 wherein the hopper has a hopper angle of 70°-150°, preferably 90-120°.

4. Apparatus according to claim 2 or 3, wherein the hopper has a conical shape.

5. Apparatus according to any of the claims 2-4 wherein the hopper is provided with a closing valve.

6. Apparatus according to any of the claims 1-5, wherein the metering unit comprises a vibrating motor.

7. Apparatus according to claim 6, wherein the metering device comprises a horizontally arranged rotor preferably driven by the vibrating motor.

8. Apparatus according to claim 7 wherein the rotor has 3-15 spikes, preferably 6-12 spikes, more preferably 8 spikes.

9. Apparatus according to claim 8, wherein an apex corner between the spikes has a rounded curve.

10. Apparatus according to any of the claims 7-9, wherein the rotor at one end is rotably driven by the motor and at the other end supported in a bearing.

11. Apparatus according to any of the claims 2-10, wherein the hopper and at least a part of the metering device form an integral structural element.

12. Apparatus according to claim 11, wherein the metering unit part is the upper part.

13. Apparatus according to any of the claims 1-12, wherein the water supply is a tap water supply.

14. Apparatus according to any of the claims 1-12, wherein the water supply is a mineral water supply, preferably a bottle holder provided with a bottle connector.

15. Apparatus according to any of the claims 1-14, wherein the heating unit heats water to about 37°C by heating water before, during of after the water addition to the powdered baby food.

16. Apparatus according to any of the claims 1-15, wherein the control unit controls the adjustable amount of powdered baby food.

17. Apparatus according to any of the claims 1-16, wherein the control unit controls the heat unit and/or the water supply unit.

18. Apparatus according to any of the claims 1-17, which comprises a sensor for the filling degree of the water supply unit and/or the water supply unit.

19. Apparatus according to any of the claims 1-18, wherein the control unit comprises a selector for discrete dosing amounts of powdered baby food.
